# EUROPEAN PATENT SPECIFICATION

(11) **EP 2 061 306 B1**
(45) Date of publication and mention of the grant of the patent: **01.09.2010**
(21) Application number: 07709168.4
(22) Date of filing: 18.01.2007
(51) Int. Cl.: A01K 5/00

(54) **APPARATUS FOR DOSING FEED FOR CATTLE**
VORRICHTUNG ZUR DOSIERUNG VON FUTTER FÜR VIEH
APPAREIL DE DOSAGE DE FOURRAGE POUR LE BETAIL

(30) Priority: 24.03.2006 NL 2000037
(43) Date of publication of application: 27.05.2009
(73) Proprietor: Liet, Cornelis Hendricus, NL-7581 TJ Losser (NL)
(72) Inventor: Liet, Cornelis Hendricus, NL-7581 TJ Losser (NL)
(74) Representative: Zonneveld, Hendrik Jan
(86) International application number: PCT/NL2007/050020
(87) International publication number: WO 2007/111503

(56) References cited:
- EP-A- 0 761 088
- DE-A- 19 539 339
- FR-A- 2 331 970
- GB-A- 1 166 205

## Description

The invention relates to an apparatus for metering fodder for cattle, which apparatus comprises a container having a bottom fitted with a conveyor and one or more metering rollers disposed at one end of the conveyor, wherein a discharge opening is provided on the side of the metering roller(s) remote from the container, which metering roller(s) can be driven in a metering direction for supplying fodder from the container to the discharge opening.

Such an apparatus is known, for example from DE-A-33 07 928 and from NL-A-7901217. In the known apparatus, the fodder is loaded into the container from the rear side, after which the conveyor conveys the fodder that has been loaded into the container in the direction of the metering roller or rollers. The fodder may be loaded into the container in the form of bales cut from a stock of silage or in the form of bales formed by a baler. The metering rollers must subsequently reduce the fodder and deposit it on a discharge conveyor, which connects to the discharge opening. The discharge conveyor subsequently deposits the reduced fodder on the left-hand side or the right-hand side of the apparatus in a feeding alley for the cattle. This limits the application possibilities of the known apparatus. Although the known apparatus is also used as a mixing wagon by depositing different feed types into the container, a very limited mixing effect is achieved with the known apparatus. Accordingly, the known apparatus is not suitable for use as a mixing wagon.

The object of the invention is to provide an apparatus of the above kind by which a larger number of application possibilities can be realised.

According to claim 1, an end wall comprising a mixing element is provided at the end of the conveyor opposite the metering roller(s), which mixing element is arranged for conveying fodder supplied by the conveyor in upward direction and towards the metering roller(s).

In this way an apparatus is obtained which enables intense mixing of fodder present in the container. Said mixing only requires a comparatively limited power level.

The apparatus has a loading space for fodder disposed above the discharge opening on the side of the metering roller(s) remote from the container, wherein the metering roller(s) can be driven as feed roller(s) and reduction roller(s) in a direction opposed to the metering direction for supplying fodder that is present in the loading space to the container.

In this way an apparatus is obtained wherein the metering roller(s) can also be used as feed roller(s) and reduction roller(s), wherein fodder can be loaded into the loading space in the form of bales and the roller(s) reduce(s) the bales and introduce the fodder into the container. Following this, other feed components may be introduced into the container, which feed components can be mixed by activating the conveyor. Then the mixed fodder can be discharged from the container again by the metering roller(s) and be delivered to the cattle in a usual manner via a discharge conveyor.

Preferably, the end wall is pivotally connected to the container at the upper side. In this way the apparatus can also be used for uniformly filling a silage pit with roughage.

The invention will be explained in more detail hereinafter with reference to the drawing, which schematically shows two embodiments of the apparatus according to the invention.
Fig. 1 is a schematic side elevation of an embodiment of the apparatus according to the invention.

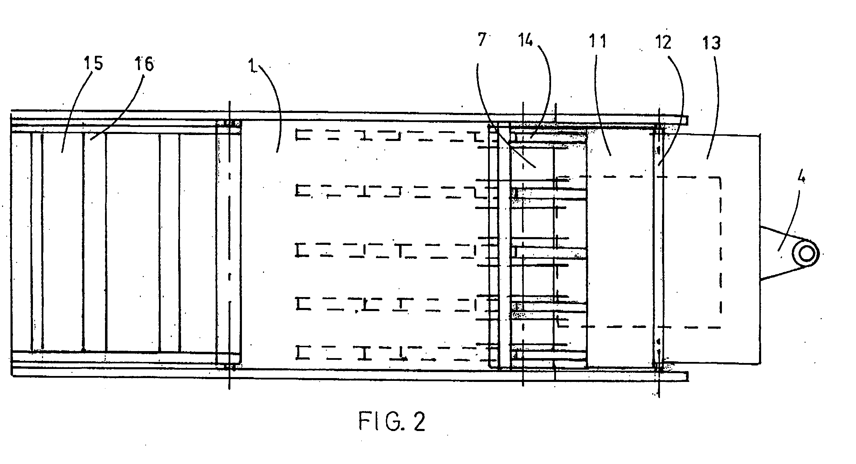

Fig. 2 is a plan view of the apparatus that is shown in Fig. 1.
Fig. 3 is a schematic side elevation of a second embodiment of the apparatus according to the invention.

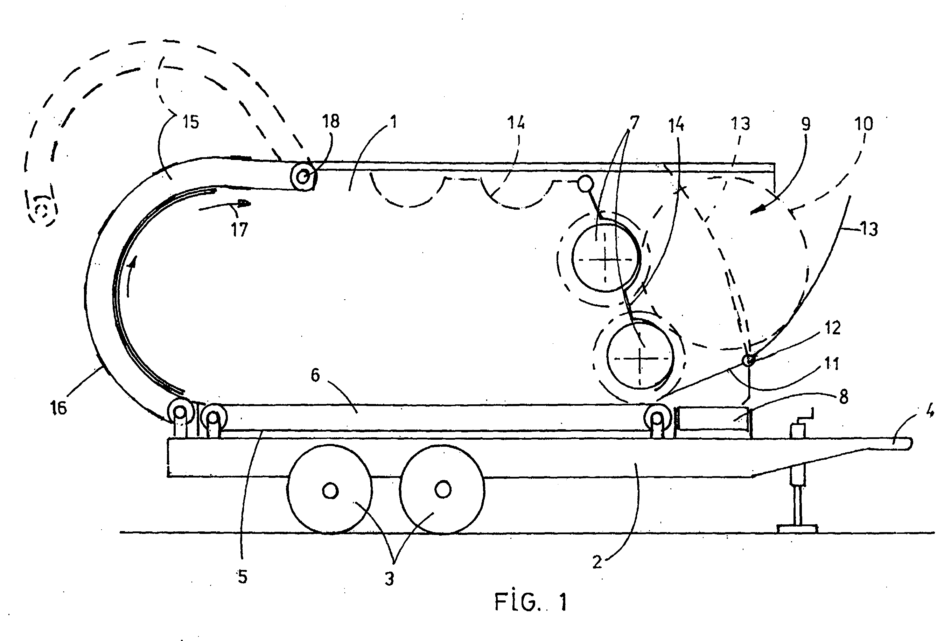

The drawing shows an apparatus for metering fodder which is provided with a container 1 mounted on a chassis 2 with wheels 3, one of which is shown in Fig. 1. The chassis comprises a drawbar 4, by means of which the apparatus can be coupled to a tractor.

The container 1 comprises a bottom 5 fitted with a conveyor 6, which can be driven in two opposite directions. Two metering rollers 7 disposed one above the other are provided at the end of the conveyor 6 near the drawbar 4, which rollers may be configured in a manner that is known per se. A discharge conveyor 8 is disposed on the side of the metering rollers 7 remote from the container 1, which discharge conveyor can likewise be driven in two opposite directions, so that fodder can be delivered on the left-hand side or on the right-hand side of the apparatus.

When an amount of fodder is present in the container 1, said fodder can be delivered in a metered manner via the discharge conveyor 8 by having the conveyor 6 convey the fodder in the direction of the metering rollers 7. The metering rollers 7 can be driven in a metering direction, in which the fodder from the container 1 is supplied to the discharge conveyor 8. The discharge conveyor 8 delivers the fodder being supplied on the left-hand side or the right-hand side of the apparatus.

In the present apparatus, a loading space 9 is disposed above the discharge conveyor 8 on the side of the metering rollers remote from the container 1, into which a bale of fodder 10 has been loaded. The loading space 9 is separated from the discharge conveyor 8 by a flap 11, which is pivotally connected to the apparatus at 12. This enables the flap 11 to pivot between the supplying position as shown and a metering position illustrated in a dashed line, in which the discharge conveyor 8 can receive fodder from the metering rollers 7. As the drawing shows, the loading space 9 is furthermore fitted with a loading unit 13 in the form of a loading board, which is likewise pivotally connected to the apparatus at 12. The loading board 13 can thus pivot between the illustrated loading position, in which fodder can be loaded into the loading space 9, and a metering position illustrated in a broken line, in which the loading board 13 forms a guide wall that extends in the direction of the discharge conveyor 8.

When the flap 11 and the loading board 13 are in the illustrated position, a bale of fodder 10 can be loaded into the loading space 9 in the indicated manner. The loading board 13 guides the bale of fodder 10 in the direction of the metering rollers 7. The loading board 13 may be fitted with rollers or other conveying elements so as to facilitate the movement of fodder in the direction of the metering rollers 7. To prevent the metering rollers 7 from being overloaded or getting stuck, a grating 14 is provided, which is pivotable between a position of rest, which is illustrated in a broken line, and an operative position, in which the grating 14 is positioned between the metering rollers 7 and the loading space 9. In this operative position the grating 14 is supported, for example by means of blocks of plastic material, on the metering rollers 7 between the cutting or loosening elements (not shown) thereof. The metering rollers 7 can be driven in a direction opposed to the metering direction, so that the bale of fodder 10 is gradually reduced and the reduced fodder present in the container 1 is deposited on the conveyor 6. The conveyor 6 can be driven to convey the reduced fodder towards the end wall.

Once a desired amount of fodder has been introduced into the container via the metering rollers 7, the flap 11 and the loading board 13 can be moved to the metering position that is illustrated in the broken line. Subsequently other feed types, such as maize, potatoes, brewer's grains, meal, etc., may be deposited into the container from the upper side. The various feed types can be mixed in a very efficient manner in the apparatus as described, since the end wall 15 is provided with a mixing element 16. Said fixing element is configured as an endless conveyor in the present embodiment, which is guided in the illustrated path by a guide of plastic material at the inner side. The mixing element 16 conveys the feed mixture being supplied by the conveyor 6 in upward direction towards the metering rollers 7, as is schematically indicated by the arrows 17. Alternatively, the mixing element 16 may comprise a number of successive, drivable rollers. Said rollers are driven in such a manner that the feed mixture is conveyed in the direction indicated by the arrows 17.

As a result of the rolling movement of the various feed types, a good, intense mixing thereof takes place without much power being required. Once the various feed types have been sufficiently mixed, the feed mixture can be discharged from the container via the metering rollers 7. To that end the direction of movement of the conveyor 6 is reversed. Possibly, the conveying direction of the mixing element 16 is reversed as well. The metering rollers are now driven in the metering direction, as a result of which the metering rollers 7 deposits the feed mixture onto the discharge conveyor 8.

The apparatus as described may also be used as a metering wagon for filling a silage pit. To that end chopped maize or grass, for example, is collected from the field with the present apparatus. Once the container is full, the roughage present therein is gradually discharged from the container by opening the end wall 15. The end wall 15 is to that end pivotally connected to the container 1 at 18, so that the end wall 15 can be pivoted to the position that is illustrated in a broken line. By having the conveyor 6 operate at a low conveying speed, the roughage can be gradually distributed over a silage pit. It is also possible to open the end wall 15 only partially so as to control the magnitude of the flow of roughage. As an alternative to a pivotable connection between the end wall 15 and the container 1, the end wall 15 may be slidably connected to the container 1, so that a discharge opening can be realised by moving the end wall 15 away from the container 1.

In the embodiment in which the end wall 15 is pivotally connected to the container 1, it is also possible to discharge a feed mixture in a metered manner on the side of the end wall 15 by opening the end wall 15 further or less far and varying the conveying speed of the conveyor. In this embodiment, the chassis 2 may be fitted with a discharge conveyor 8 at the rear end for discharging the feed mixture in transverse direction on the left-hand side or on the right-hand side of the apparatus. The conveyor 6 may in that case be configured to convey only in the direction of the end wall 15. Also the metering rollers 7 only need to be rotatably drivable in one direction in that case for reducing a bale of fodder that is present in the loading space 9. The metering rollers 7 operate as feed rollers and reduction rollers in that case. The discharge conveyor 8 is preferably movably connected to the chassis 2 in this case between an operative position, in which material can be delivered from the container 1 on the left-hand side or the right-hand side thereof, and a retracted position, in which the material from the container 1 can be delivered directly behind the container.

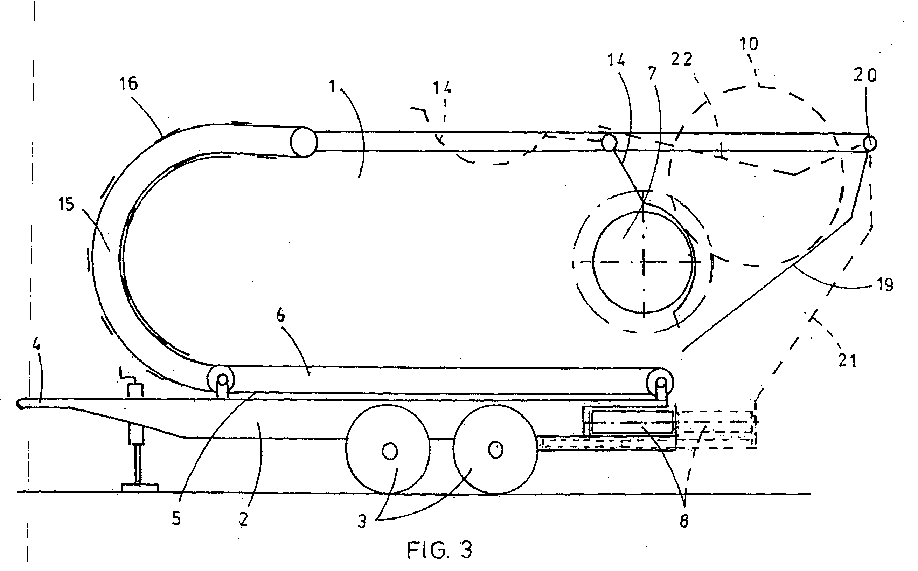

Fig. 3 shows a second embodiment of the present apparatus, in which like parts are indicated by the same numerals. In this embodiment one metering roller 7 is used, which metering roller is disposed on the side of the chassis 2 remote from the drawbar 4. It is also possible to use two or more metering rollers 7 in this embodiment, of course. In this case the end wall 15 is not pivotally connected to the container 1. The end wall 15 does comprise the mixing element 16, however, so that feed types that have been introduced into the container can be mixed in the above-described manner.

In the embodiment that is shown in Fig. 3, the discharge conveyor 8 is movably supported in the chassis 2 between a position of rest as shown, in which the discharge conveyor 8 is positioned under the conveyor 6, and an operative position illustrated in a broken line, in which the discharge conveyor 8 is positioned substantially directly below the loading space 9. In this embodiment the container 1 is provided with a loading unit 19 configured as a loading board, which is pivotally connected to the container at 20. The loading board 19 is pivotable between the illustrated loading position, a metering position illustrated in a broken line 21, and a discharge position illustrated in a broken line 22. The loading board 19 may be fitted with rollers or other conveying elements, if desired, so as to facilitate the movement of fodder in the direction of the metering rollers 7. In the metering position 21, the loading board 19 forms a guide wall again, which extends in the direction of the discharge conveyor 8. In this position the fodder or the feed mixture that is discharged from the container 1 as a result of the interaction between the conveyor 6 and the metering roller 7 is received on the discharge conveyor 8, which delivers the feed to the left or to the right. In the discharge position 22 the present apparatus, with the discharge conveyor 8 in the retracted position, can be used in the manner described herein for forming a silage pit. In the retracted position of the discharge conveyor, only a discharge opening is present on the side of the metering roller remote from the container. In this position of the discharge conveyor, the apparatus can also be used for filling a biogas installation with organic material, which has been mixed in the container 1 by the present apparatus. Generally, the term "fodder" is understood to mean any organic material that can be processed with the present apparatus for use in a biogas installation.

It is noted that the present apparatus may also be configured without a discharge conveyor. Furthermore it is noted that the end wall 15 with the mixing element 16 may also be used in an apparatus in which the metering rollers 7 can be driven only in the metering direction or only in the loading direction.

From the foregoing it will be apparent that the invention provides an apparatus that has various application possibilities. In comparison with conventional metering wagons, the apparatus has the advantage that bales of fodder can be reduced by the metering rollers, so that the mixing thereof with other feed types can take place in an efficient manner in the container. Said mixing only requires a limited power level.

Consequently, the invention is not limited to the embodiment described in the foregoing, which can be varied in various ways within the scope of the invention as defined in the claims.

## Claims

1. An apparatus for mixing and/or metering fodder, which apparatus comprises a container (1) having a bottom (5) fitted with a conveyor (6) and one or more metering rollers (7) disposed at one end of the conveyor, **characterised in that** an end wall (15) comprising a mixing element (16) is provided at the end of the conveyor opposite the metering roller(s), which mixing element is arranged for conveying fodder supplied by the conveyor in upward direction and towards the metering roller(s) (7).

2. An apparatus according to claim 1, wherein a loading space (9) for fodder is disposed on the side of the metering roller(s) (7) remote from the container, wherein the metering roller(s) can be driven as feed roller(s) and reduction roller(s) to supply fodder that is present in the loading space (9) to the container.

3. An apparatus according to claim 1 or 2, wherein a discharge opening is provided on the side of the metering roller(s) (7) remote from the container (1), wherein the conveyor (6) and the metering roller(s) can be driven in a metering direction for supplying fodder from the container to the discharge opening.

4. An apparatus according to claim 1, 2 or 3, wherein the end wall (15) is arcuate in shape and comprises an endless conveyor (16).

5. An apparatus according to claim 1, 2 or 3, wherein the end wall (15) is arcuate in shape and comprises a number of successive drivable rollers.

6. An apparatus according to any one of the preceding claims, wherein the end wall (15) is movable with respect to the container (1) at the upper side so as to form a discharge opening.

7. An apparatus according to claim 6, wherein the end wall (15) is pivotally connected to the container (1).

8. An apparatus according to any one of the preceding claims 2 to 7, wherein a grating (14) is provided, which grating is pivotable between a position of rest and an operative position, in which the grating is positioned between the roller(s) (7) and the loading space (9).

9. An apparatus according to any one of the claims 3-8, wherein a flap (11) is provided between the loading space (9) and the discharge opening, which flap is pivotable between a supply position, in which the loading space is separated from the discharge opening, and a metering position, in which fodder from the roller (s) can pass through the discharge opening.

10. An apparatus according to any one of the claims 3-9, wherein the loading space (9) is provided with a loading unit (13), which loading unit is pivotable between a loading position, in which fodder can be loaded into the loading space, and a metering position, in which the loading unit forms a guide wall which extends in the direction of the discharge opening.

11. An apparatus according to claim 10, wherein the loading unit (13) can furthermore be pivoted to a discharge position, in which the loading space (9) is open in the direction away from the metering roller(s) (7).

12. An apparatus according to any one of the preceding claims, wherein a discharge conveyor (8) is movable between an operative position and a retracted position.

13. A method for mixing fodder, using an apparatus according to any one of the preceding claims wherein a bale of fodder (10) is loaded into a loading space (9), which bale of fodder is reduced by the rollers (7), and the reduced fodder is deposited on the conveyor (6) in the container (1), wherein one or more other feed types is (are) added to the reduced fodder, wherein the various feed types are mixed by means of the mining element (16) in the end wall (15) and the conveyor.

## Patentansprüche

1. Eine Vorrichtung zum Mischen und/oder Dosieren von Futter, wobei die Vorrichtung aufweist: einen Behälter (1), der einen mit einer Fördereinrichtung (6) ausgestatteten Boden (5) aufweist, und eine oder mehr an einem Ende der Fördereinrichtung angeordnete Dosierwalze(n) (7), **dadurch gekennzeichnet, dass** eine ein Mischelement (16) aufweisende Endwand (15) an dem Ende der Fördereinrichtung entgegengesetzt zu der/den Dosierwalze(n) vorgesehen ist, wobei das Mischelement zum Befördern von von der Fördereinrichtung zugeführtem Futter in Richtung nach oben und in Richtung zu der/den Dosierwalze(n) (7) hin angeordnet ist.

2. Eine Vorrichtung gemäß Anspruch 1, wobei ein Laderaum (9) für Futter an der von dem Behälter entfernten Seite der Dosierwalze(n) (7) angeordnet ist, wobei die Dasierwalze(n) als Zuführwalze(n) und als zerkleinerungswalze(n) angetrieben werden kann/können, um Futter, das sich in dem Laderaum (9) befindet, dem Behälter zuzuführen.

3. Eine Vorrichtung gemäß Anspruch 1 oder 2, wobei eine Entlade-Öffnung an der von dem Behälter (1) entfernten Seite der Dosierwalze(n) (7) vorgesehen ist, wobei die Fördereinrichtung (6) und die Dosierwalze(n) zum Befördern von Futter von dem Behälter zu der Entlade-Öffnung in einer Dosierrichtung angetrieben werden können.

4. Eine Vorrichtung gemäß Anspruch 1, 2 oder 3, wobei die Endwand (15) bogenförmig ist und eine Endlosfördereinrichtung (16) aufweist.

5. Eine Vorrichtung gemäß Anspruch 1, 2 oder 3, wobei die Endwand (15) bogenförmig ist und eine Anzahl von aufeinanderfolgenden antreibbaren Walzen aufweist.

6. Eine Vorrichtung gemäß einem der vorhergehenden Ansprüche, wobei die Endwand (15) an der oberen Seite relativ zu dem Behälter (1) bewegbar ist, um eine Endlade-Öffnung auszubilden.

7. Eine Vorrichtung gemäß Anspruch 6, wobei die Endwand (15) gelenkig an den Behälter (1) angeschlossen ist.

8. Eine Vorrichtung gemäß einem der vorhergehenden Ansprüche 2 bis 7, wobei ein Abdeckgitter (14) vorgesehen ist, wobei das Abdeckgitter zwischen einer Ruhestellung und einer Betriebsstellung schwenkbar ist, in der das Abdeckgitter zwischen der/den Walze(n) (7) und dem Laderaum (9) positioniert ist.

9. Eine Vorrichtung gemäß einem der Ansprüche 3 bis 8, wobei eine Klappe (11) zwischen dem Laderaum (9) und der Entlade-Öffnung vorgesehen ist, wobei die Klappe zwischen einer Zuführstellung, in der der Laderaum von der Entlade-Öffnung getrennt ist, und einer Dosierstellung, in der Futter von der/den Walze(n) durch die Entlade-Öffnung hindurchpassieren kann, schwenkbar ist.

10. Eine Vorrichtung gemäß einem der Ansprüche 3 bis 9, wobei der Laderaum (9) mit einer Lade-Einheit (13) versehen ist, wobei die Lade-Einheit zwischen einer Ladestellung, in der Futter in den Laderaum geladen werden kann, und einer Dosierstellung, in der die Lade-Einheit eine Führungswand ausbildet, die sich in Richtung zu der Entlade-Öffnung erstreckt, schwenkbar ist.

11. Eine Vorrichtung gemäß Anspruch 10, wobei die Lade-Einheit (13) ferner in eine Entladestellung geschwenkt werden kann, in der der Laderaum (9) in Richtung von der/den Dosierwalze(n) (7) weg offen ist.

12. Eine Vorrichtung gemäß einem der vorhergehenden Ansprüche, wobei eine Entlade-Fördereinrichtung (8) zwischen einer Betriebsstellung und einer Zurückziehstellung bewegbar ist.

13. Ein verfahren zum Mischen von Futter mittels einer Vorrichtung gemäß einem der vorhergehenden Ansprüche, wobei ein Futterballen (10) in einen Laderaum (9) geladen wird, wobei der Futterballen durch die Walzen (7) zerkleinert wird und das zerkleinerte Futter auf der Fördereinrichtung (6) in dem Behälter (1) positioniert wird, wobei dem zerkleinerten Futter eine oder mehr andere Art(en) von Futter beigefügt wird/werden, wobei die unterschiedlichen Arten von Futter mittels des Mischelements (16) in der Endwand (15) und mittels der Fördereinrichtung gemischt werden.

## Revendications

1. Appareil pour mélanger et/ou doser du fourrage, lequel appareil comprend un conteneur (1) ayant un fond (5) équipé d'un convoyeur (6) et d'un ou plusieurs rouleaux de dosage (7) disposés au niveau d'une extrémité du convoyeur, **caractérisé en ce qu'**une paroi d'extrémité (15) comprenant un élément de mélange (16) est prévue au niveau de l'extrémité du convoyeur opposé au rouleau (aux rouleaux) de dosage, lequel élément de mélange est agencé pour transporter le fourrage alimenté par le convoyeur dans la direction ascendante et vers le (les) rouleau(x) de dosage (7).

2. Appareil selon la revendication 1, dans lequel un espace de chargement (9) pour le fourrage est disposé sur le côté du (des) rouleau(x) de dosage (7) à distance du conteneur, dans lequel le (les) rouleau(x) de dosage peut (peuvent) être entraîné(s) en tant que rouleau(x) d'alimentation et rouleau(x) de réduction pour alimenter le fourrage qui est présent dans l'espace de chargement (9) du conteneur.

3. Appareil selon la revendication 1 ou 2, dans lequel l'ouverture de décharge est prévue sur le côté du (des) rouleau(x) de dosage (7) à distance du conteneur (1), dans lequel le convoyeur (6) et le (les) rouleau(x) de dosage peuvent être entraînés dans une direction de dosage pour alimenter le fourrage du conteneur jusqu'à l'ouverture de décharge.

4. Appareil selon la revendication 1, 2 ou 3, dans lequel la paroi d'extrémité (15) a une forme arquée et comprend un convoyeur sans fin (16).

5. Appareil selon la revendication 1, 2, ou 3, dans lequel la paroi d'extrémité (15) a une forme arquée et comprend un certain nombre de rouleaux successifs pouvant être entraînés.

6. Appareil selon l'une quelconque des revendications précédentes, dans lequel la paroi d'extrémité (15) est mobile par rapport au conteneur (1) au niveau du côté supérieur afin de former une ouverture de décharge.

7. Appareil selon la revendication 6, dans lequel la paroi d'extrémité (15) est raccordée de manière pivotante au conteneur (1).

8. Appareil selon l'une quelconque des revendications 2 à 7 précédentes, dans lequel on prévoit une grille (14), laquelle grille peut pivoter entre une position de repos et une position opérationnelle, dans laquelle la grille est positionnée entre le (les) rouleau(x) (7) et l'espace de chargement (9).

9. Appareil selon l'une quelconque des revendications 3 à 8, dans lequel un volet (11) est prévu entre l'espace de chargement (9) et l'ouverture de décharge, lequel volet peut pivoter entre une position d'alimentation, dans laquelle l'espace de chargement est séparé de l'ouverture de décharge, et une position de dosage, dans laquelle le fourrage provenant du (des) rouleau(x) peut passer à travers l'ouverture de décharge.

10. Appareil selon l'une quelconque des revendications 3 à 9, dans lequel l'espace de chargement (9) est prévu avec une unité de chargement (13), laquelle unité de chargement peut pivoter entre une position de chargement dans laquelle le fourrage peut être chargé dans l'espace de chargement et une position de dosage dans laquelle l'unité de chargement forme une paroi de guidage qui s'étend dans la direction de l'ouverture de décharge.

11. Appareil selon la revendication 10, dans lequel l'unité de chargement (13) peut en outre être pivotée dans une position de décharge, dans laquelle l'espace de chargement (9) est ouvert dans la direction à distance du (des) rouleau(x) de dosage (7).

12. Appareil selon l'une quelconque des revendications précédentes, dans lequel un convoyeur de décharge (8) est mobile entre une position opérationnelle et une position rétractée.

13. Procédé pour mélanger du fourrage, en utilisant un appareil selon l'une quelconque des revendications précédentes, dans lequel une balle de fourrage (10) est chargée dans un espace de chargement (9), laquelle balle de fourrage est réduite par les rouleaux (7) et le fourrage réduit est déposé sur le convoyeur (6) dans le conteneur (1), dans lequel un ou plusieurs types d'alimentation est (sont) ajouté(s) au fourrage réduit, dans lequel les différents types d'alimentation sont mélangés au moyen de l'élément de mélange (16) dans la paroi d'extrémité (15) et du convoyeur.
